# EUROPÄISCHE PATENTSCHRIFT

(11) **EP 3 647 083 B1**
(45) Veröffentlichungstag und Bekanntmachung des Hinweises auf die Patenterteilung: **09.11.2022**
(21) Anmeldenummer: 19205592.9
(22) Anmeldetag: 28.10.2019
(51) Int. Cl.: B60G 3/20, B60G 13/00

(54) **EINZELRADAUFHÄNGUNG FÜR EIN LENKBARES RAD**
INDEPENDENT WHEEL SUSPENSION FOR A SPRUNG, STEERABLE WHEEL
SUSPENSION À ROUES INDÉPENDANTES POUR UNE ROUE DIRECTRICE

(30) Priorität: 29.10.2018 DE 102018126908
(43) Veröffentlichungstag der Anmeldung: 06.05.2020
(73) Patentinhaber: HORSCH LEEB Application Systems GmbH, 94405 Landau an der Isar (DE)
(72) Erfinder: Leeb, Theodor, 94405 Landau an der Isar (DE); Zink, Florian, 94405 Landau an der Isar (DE); Arnusch, Alexander, 94405 Landau an der Isar (DE)
(74) Vertreter: v. Bezold & Partner Patentanwälte - PartG mbB

(56) Entgegenhaltungen:
- EP-A1- 1 726 512
- EP-A1- 3 287 306
- EP-A2- 1 627 762
- EP-B1- 2 328 395
- WO-A1-2010/020607
- CN-A- 109 664 701
- DE-A1- 4 000 929
- DE-A1-102017 111 793
- US-A1- 2011 115 180
- US-B1- 6 406 043

## Beschreibung

Die Erfindung betrifft eine Einzelradaufhängung für ein lenkbares Rad eines Kraftfahrzeugs, vorzugsweise einer mobile Landmaschine, beispielsweise einer Pflanzenschutzspritze.

Herkömmliche landwirtschaftliche Fahrzeuge sind normalerweise mit einfachen und robusten Starrachsen ausgestattet. Die Vorderachsen verfügen zur Verbesserung der Geländegängigkeit meist über ein Pendelgelenk. Die Hinterachsen müssen häufig auf jedwede Federung aus Gründen der Traktionsoptimierung verzichten. Für manche Einzelfälle ist es jedoch sinnvoll, die Fahrwerke mit Federungssystemen auszustatten, auch aus Gründen der Bodenschonung. So sind Einzelradaufhängungen für landwirtschaftliche Fahrzeug aus dem Stand der Technik bekannt. Diese bieten gegenüber Starrachsen den Vorteil, dass keine gegenseitige Beeinflussung der Federung auf beiden Seiten des Fahrzeugs erfolgt.

Ein Beispiel für eine Einzelradaufhängung für ein landwirtschaftliches Zug-, Transport- oder Spezialfahrzeug ist in der EP 2 965 928 A1 offenbart. Die Einzelradaufhängung umfasst eine Lenksäule, die über eine Gabelbrücke mit einer in ungefähr vertikale Richtung beweglichen Linearführung zusammenwirkt, wobei die Gabelbrücke eine um eine ungefähr vertikal verlaufende Drehachse schwenkbare Lenkverbindung zu einem Fahrzeugrahmen herstellt. Weiter ist die Linearführung mit einem fluidischen Dämpfungselement gekoppelt, das einen tragenden Bestandteil der Gabelbrücke bildet. Das Dämpfungselement umfasst einen Dämpfungszylinder, der als Lenksäule ausgebildet ist. Weiter weist das Dämpfungselement ein oder mehrere Druckreservoirs mit Anschlüssen auf, wobei die Druckreservoirs über Leitungssysteme fluidisch mit dem Dämpfungszylinder verbunden sind. Der Antrieb des Rads erfolgt über einen hydraulischen Radnabenmotor.

Zur Erhöhung der Bodenfreiheit ist es ferner bekannt, Portalachsen einzusetzen. Landwirtschaftliche Fahrzeuge mit Portalachsen und Portalgetrieben sind bspw. in der EP 3 061 640 A1 und der EP 3 061 332 A1 offenbart.

Die US 6 406 043 B1 offenbart ein Lenk- und Aufhängungsanordnung für ein landwirtschaftliches Fahrzeug, mit Kanalelementen und Verbindungselementen. Ein Kanalelement ist durch zwei Verbindungselemente mit dem anderen Kanalelement verbunden. Jedes Verbindungselement umfasst zwei Hülsen und einen Verbindungsstab. Jede der Hülsen ist jeweils auf einem Montagestift montiert. Jeder der Stifte und erstreckt sich durch das Kanalelement, so dass er von den Seitenwänden des jeweiligen Kanalelements getragen wird. Jede der Hülsen ist in Schiebesitz auf dem Stift, so dass sie sich um die Achse des Stifts bei der Schwenkbewegung des Verbindungselements drehen.

Die EP 1 726 512 A1, die EP 1 627 762 A2, die WO 2010/020607 A1 und die DE 10 2017 111793 A1 offenbaren weiteren technologischen Hintergrund zur Aufhängung von Rädern.

Die EP 3 287 306 A1 offenbart eine Fahrzeugaufhängungsstruktur umfassend eine Aufhängungsarm, eine Radbefestigungseinheit, an der ein Rad befestigt ist und die so konfiguriert ist, dass sie das Rad antreibt, und ein Kugelgelenk, das an einer Position angeordnet ist, die die Rotationsmittellinie des von der Radbefestigungseinheit angetriebenen Rades schneidet und mit dem Aufhängungsarm verbunden ist.

Die US 2011/115180 A1 offenbart eine Aufhängungsanordnung für ein Landfahrzeug, insbesondere für ein Schneemobil.

Die DE 40 00 929 A1 offenbart eine Einzelradaufhängung für Landfahrzeuge. Der Radträger wird durch zwei jeweils im Allgemeinen längs oder quer zur Fahrtrichtung übereinanderliegenden Lenkern geführt. Die Verbindungspunkte beider Lenker mit dem Radträger liegen in Höhe der Raddrehachse oder darüber.

Die vorliegende Offenbarung geht von der eine Einzelradaufhängung gemäß dem Oberbegriff des Anspruchs 1 offenbarenden Druckschrift EP 2 328 395 B1 aus. Diese offenbart eine Einzelradaufhängung mit einem Radträger, der ein Trägerelement und eine Radnabe aufweist. Ein hydrostatischer Motor treibt die Radnabe an. Um eine Lenkung zu ermöglichen, ist der Radträger schwenkbar an einem aufrechten Königszapfen montiert, der Teil des Radträgers ist. Jeder Radträger ist über einen oberen Arm und einen unteren Arm an einer entsprechenden Radträgerstruktur befestigt. Der obere Arm und der untere Arm sind in H-Form ausgeführt. Jeder Arm ist über ein entsprechendes Paar Drehgelenke schwenkbar mit der Radträgerstruktur verbunden, die eine Schwenkbewegung der Arme um eine Längsachse ermöglichen. Am gegenüberliegenden (äußeren) Ende jedes Arms verbindet ein entsprechendes Paar Drehgelenke jeden Arm mit dem Radträger.

Das System der EP 2 328 395 B1 kann bspw. den Nachteil aufweisen, dass aufgrund der Drehachsen eine eigentlich überbestimmte Aufhängung entsteht, die nur unter exakter Einhaltung der Fertigungstoleranzen möglich ist.

Zwar offenbart das Dokument CN 109664701 A alle Merkmale des Anspruchs 1, allerdings bildet dieses keinen Stand der Technik nach Artikel 54(2) EPÜ oder 54(3) EPÜ.

Der Erfindung liegt die Aufgabe zu Grunde, eine alternative und/oder verbesserte Einzelradaufhängung vorzusehen.

Die Aufgabe wird gelöst durch eine Einzelradaufhängung gemäß dem unabhängigen Anspruch. Vorteilhafte Weiterbildungen sind in den abhängigen Ansprüchen und der Beschreibung angegeben.

Die Erfindung schafft eine Einzelradaufhängung für ein lenkbares Rad eines Kraftfahrzeugs, vorzugsweise einer mobilen Landmaschine, beispielsweise einer Pflanzenschutzspritze. Die Einzelradaufhängung weist einen Radträger auf, der einen Trägerkörper und eine drehbar mit dem Trägerkörper verbundene Radnabe für das lenkbare Rad auf. Die Einzelradaufhängung weist einen Antriebsmotor (z. B. Direktantrieb-Antriebsmotor, z. B. Hydraulikmotor oder Elektromotor) auf, der von dem Trägerkörper getragen und antreibend mit der Radnabe verbunden ist. Die Einzelradaufhängung weist einen ersten Querlenker auf, der mittels eines ersten Kugelgelenks mit dem Trägerkörper vorzugsweise oberhalb des Antriebsmotors und/oder der Radnabe verbunden ist (z. B. direkt oberhalb oder zueinander versetzt oberhalb). Die Einzelradaufhängung weist einen zweiten Querlenker auf, der mittels eines zweiten Kugelgelenks mit dem Trägerkörper vorzugsweise oberhalb des ersten Querlenkers verbunden ist(z. B. direkt oberhalb oder zueinander versetzt oberhalb).

Gegenüber der bekannten Einzelradaufhängung der EP 2 328 395 B1 kann die Einzelradaufhängung gemäß der vorliegenden Offenbarung insbesondere durch Verwendung der Kugelgelenke nicht überbestimmt sein, sodass größere Fertigungs- und Montagetoleranzen ermöglicht werden. Die Kugelgelenke ermöglichen, dass zwischen dem Radträger und den Querlenkern sowohl Relativbewegungen zum Lenken des Rads als auch Relativbewegungen bezüglich einer Vertikalachse, z. B. für Einfederbewegungen oder Höhenniveauanpassungen, ermöglicht werden. Die gewählte Anordnung der Querlenker am Radträger gewährleistet zudem eine große Bodenfreiheit für das Kraftfahrzeug.

Vorzugsweise definieren das erste Kugelgelenk und das zweite Kugelgelenk eine Lenkachse des Radträgers, vorzugsweise eine Lenkachse einer Achsschenkellenkung, zweckmäßig gemäß einer Ackermanngeometrie.

In einem Ausführungsbeispiel weist die Einzelradaufhängung ferner eine Vorrichtung zur Stoßdämpfung und/oder Höhenniveauanpassung auf, die vorzugsweise gelenkig mit dem ersten Querlenker verbunden ist.

In einem weiteren Ausführungsbeispiel ist der erste Querlenker gabelförmig oder Y-förmig ausgebildet, vorzugsweise mit einem Stielbereich, der sich zweckmäßig in zwei gegenüberliegende Armbereiche gabelt. Vorzugsweise kann ein freies Ende des Stielbereichs mittels des ersten Kugelgelenks mit dem Trägerkörper verbunden sein. Diese Bauform für den ersten Querlenker kann bspw. vorteilhaft hinsichtlich einer bauraumgünstigen Anordnung der Vorrichtung zur Stoßdämpfung und/oder Höhenniveauanpassung und der Aufhängung des ersten Querlenkers an der Vorrichtung zur Stoßdämpfung und/oder Höhenniveauanpassung sein.

In einer Weiterbildung ist die Vorrichtung zur Stoßdämpfung und/oder Höhenniveauanpassung gelenkig, vorzugsweise schwenkbar, mit dem Stielbereich verbunden. Dadurch verläuft der Kraftfluss zwischen dem Radträger und der Vorrichtung zur Stoßdämpfung und/oder Höhenniveauanpassung auf vorteilhafte Weise nur über den Stielbereich des ersten Querlenkers.

In einer Ausführungsform ist der zweite Querlenker zumindest teilweise bogenförmig mit zwei gegenüberliegenden Armbereichen ausgebildet. Vorzugsweise ist die Vorrichtung zur Stoßdämpfung und/oder Höhenniveauanpassung zwischen den zwei gegenüberliegenden Armbereichen angeordnet, z. B. mittig.

In einer weiteren Ausführungsform ist die Vorrichtung zur Stoßdämpfung und/oder Höhenniveauanpassung als ein hydropneumatischer Zylinder ausgebildet. Damit kann sie bspw. als eine integrierte Einheit sowohl der Stoßdämpfung dienen als auch ein Höhenniveau der Einzelradaufhängung anpassen (Bodenfreiheit vergrößern oder verkleinern).

In einer weiteren Ausführungsform weist die Einzelradaufhängung eine Spurstange zur Verbindung mit einem Lenkzylinder auf, wobei die Spurstange zweckmäßig über ein drittes Gelenk, vorzugsweise Kugelgelenk, mit dem Trägerkörper verbunden ist.

In einer Weiterbildung ist die mit der Vorrichtung zur Stoßdämpfung und/oder Höhenniveauanpassung gelenkig verbundene Seitenfläche des Stielbereichs des ersten Querlenkers entgegengesetzt zu der Seitenfläche des Trägerkörpers, an der das dritte Gelenk angebracht ist, gewandt. Diese Anordnung kann bspw. vorteilhaft dahingehend sein, dass Bauraum für die Lenkvorrichtung, zu der die Spurstange zugeordnet ist, geschaffen wird.

In einem weiteren Ausführungsbeispiel ist der erste Querlenker und/oder der zweite Querlenker asymmetrisch ausgebildet. Die asymmetrische Ausbildung ermöglicht es, die Querlenker so zu formen, dass sie sich im Wesentlichen in Bereichen erstrecken, wo genügend Bauraum vorhanden ist, während sie in anderen angrenzenden Bereichen zusätzlichen Bauraum schaffen, z. B. für eine Lenkvorrichtung der Einzelradaufhängung. Zusätzlich oder alternativ könnten die Querlenker so bspw. auch auf eine bauraumoptimierte Anordnung der Vorrichtung zur Stoßdämpfung und/oder Höhenniveauanpassung angepasst sein.

In einem weiteren Ausführungsbeispiel weist der erste Querlenker und/oder der zweite Querlenker sich gegenüberliegende Armbereiche auf, die vorzugsweise unterschiedlich stark gekrümmt oder unterschiedlich stark angewinkelt sind. Dies kann ebenso den Vorteil haben, dass die Querlenker so geformt werden können, dass sie sich im Wesentlichen in Bereichen erstrecken, wo genügend Bauraum vorhanden ist, während sie in anderen angrenzenden Bereichen zusätzlichen Bauraum schaffen, z. B. für eine Lenkvorrichtung der Einzelradaufhängung. Zusätzlich oder alternativ könnten die Querlenker so bspw. auch auf eine bauraumoptimierte Anordnung der Vorrichtung zur Stoßdämpfung und/oder Höhenniveauanpassung angepasst sein.

In einer Weiterbildung ist der Armbereich des ersten Querlenkers und/oder des zweiten Querlenkers, der dem dritten Gelenk und/oder der Spurstange zugewandt ist, weniger stark gekrümmt oder weniger stark angewinkelt als der jeweils gegenüberliegende Armbereich des ersten Querlenkers und/oder des zweiten Querlenkers. Damit kann bspw. Bauraum für eine Lenkvorrichtung geschaffen werden.

In einer Ausführungsform ist der erste Querlenker und/oder der zweite Querlenker als Dreieckslenker ausgebildet. Alternativ oder zusätzlich können der erste Querlenker und der zweite Querlenker gemeinsam einen Doppeldreieckslenker bilden

In einer weiteren Ausführungsform erstreckt sich der Trägerkörper zur Erhöhung einer Bodenfreiheit ausgehend von der Radnabe im Wesentlichen in einer Vertikalrichtung nach oben

In einer weiteren Ausführungsform trägt der Trägerkörper die Radnabe und/oder den Antriebsmotor in einem unteren Bereich des Trägerkörpers und ist mit dem ersten und zweiten Querlenker in einem oberen Bereich des Trägerkörpers verbunden.

Bspw. kann das zweite Kugelgelenk an einer Stützfläche des Trägerkörpers angebracht sein, die den Trägerkörper nach oben hin begrenzt.

In einem Ausführungsbeispiel kann die Einzelradaufhängung ferner eine Lenkvorrichtung aufweisen.

Bspw. kann die Lenkvorrichtung für eine Achsschenkellenkung für ein Kraftfahrzeug, insbesondere eine mobile Landmaschine, vorzugsweise eine Pflanzenschutzspritze, ausgebildet sein.

Es ist möglich, dass die Lenkvorrichtung einen Lenkzylinder mit einem Zylindergehäuse und einer ersten Kolbenstange, die einfahrbar und ausfahrbar in dem Zylindergehäuse gelagert ist, aufweist.

Es ist auch möglich, dass die Lenkvorrichtung ein erstes Zwischenglied aufweist, das vorzugsweise an einem Ende der ersten Kolbenstange angebracht ist.

Vorzugsweise kann die Lenkvorrichtung die Spurstange als eine erste Spurstange aufweisen.

In einer Weiterbildung kann die erste Spurstange gelenkig an dem ersten Zwischenglied versetzt zu dem Ende der ersten Kolbenstange angebracht sein.

Zweckmäßig kann der Lenkzylinder als ein Gleichlaufzylinder ausgebildet sein.

Es ist möglich, dass der Lenkzylinder eine zweite Kolbenstange aufweist, die insbesondere entgegengesetzt zu der ersten Kolbenstange, einfahrbar und ausfahrbar in dem Zylindergehäuse gelagert ist.

Es ist auch möglich, dass die Lenkvorrichtung ein zweites Zwischenglied aufweist, das vorzugsweise an einem Ende der zweiten Kolbenstange angebracht ist.

Bspw. kann die Lenkvorrichtung eine zweite Spurstange aufweisen, die gelenkig an dem zweiten Zwischenglied versetzt zu dem Ende der zweiten Kolbenstange angebracht ist.

Die versetzte Anordnung kann einen größeren Freiheitsgrad hinsichtlich der Auswahl des Lenkzylinder und der gelenkigen Verbindung der Spurstangen mit den Kolbenstangen des Lenkzylinders ermöglichen. Mit anderen Worten gesagt, die Spurstange ist nicht direkt gelenkig an der Kolbenstange des Lenkzylinders angebracht. Damit kann beispielsweise platzsparend der Aufbau einer Ackermann-Geometrie zur Achsschenkellenkung ermöglicht werden, die ohne Vorsehen des ersten und zweiten Zwischenglieds aus Platzgründen gar nicht oder kaum möglich wäre.

Insbesondere kann das erste Zwischenglied an dem Ende der ersten Kolbenstange fest (nicht-gelenkig) angebracht (befestigt) sein.

Vorzugsweise kann das zweite Zwischenglied an dem Ende der zweiten Kolbenstange fest (nichtgelenkig) angebracht (befestigt) sein.

Bevorzugt kann eine Bewegung der ersten Kolbenstange mit einer Bewegung der zweiten Kolbenstange gekoppelt sein.

In einer weiteren Ausführungsform ist die erste Spurstange gelenkig an dem ersten Zwischenglied an einer Position angebracht, die bezüglich des Endes der ersten Kolbenstange in einer Längsrichtung der ersten Kolbenstange hin zu dem Zylindergehäuse versetzt ist. Insbesondere ist die Position auch bezüglich des Endes der ersten Kolbenstange in einer Radialrichtung bezüglich der ersten Kolbenstange versetzt.

Alternativ oder zusätzlich ist die zweite Spurstange gelenkig an dem zweiten Zwischenglied an einer Position angebracht ist, die bezüglich des Endes der zweiten Kolbenstange in einer Längsrichtung der zweiten Kolbenstange hin zu dem Zylindergehäuse versetzt ist. Insbesondere ist die Position auch bezüglich des Endes der zweiten Kolbenstange in einer Radialrichtung bezüglich der zweiten Kolbenstange versetzt. Damit können die Spurstangen dichter zueinander in einer Fahrzeugquerrichtung angeordnet werden, als dies bei direkter Anbringung an die Kolbenstangen möglich wäre.

In einem Ausführungsbeispiel weist die Lenkvorrichtung ferner ein erstes Gelenk, insbesondere ein Radialkugelgelenk, auf. Über das erste Gelenk ist die erste Spurstange an dem ersten Zwischenglied angebracht. Alternativ oder zusätzlich weist die Lenkvorrichtung ein zweites Gelenk, insbesondere ein Radialkugelgelenk, auf. Über das zweite Gelenk ist die zweite Spurstange an dem zweiten Zwischenglied angebracht.

In einem weiteren Ausführungsbeispiel ist ein Abstand zwischen dem Ende der ersten Kolbenstange und dem Ende der zweiten Kolbenstange größer ist als ein Abstand zwischen dem ersten Gelenk und dem zweiten Gelenk. Der Abstand kann insbesondere in einer Fahrzeugerrichtung gemessen sein. Damit können die Gelenke dichter zueinander in einer Fahrzeugquerrichtung angeordnet werden, als dies bei direkter Anbringung an die Kolbenstangen möglich wäre.

In einer Ausführungsvariante weist die Lenkvorrichtung ferner ein erster Verbindungsbauteil auf, das das erste Zwischenglied und das zweite Zwischenglied miteinander verbindet. Vorzugsweise kann die Lenkvorrichtung zudem ein zweites Verbindungsbauteil aufweisen. Das zweite Verbindungsbauteil kann das das erste Zwischenglied und das zweite Zwischenglied separat von dem ersten Verbindungsbauteil miteinander verbinden. Die Verbindungsbauteile ermöglichen eine zusätzliche Abstützung zwischen den Zwischengliedern und den Spurstangen.

In einer weiteren Ausführungsvariante bewirkt ein Einfahren und Ausfahren der ersten Kolbenstange eine entsprechende Verschiebung des ersten Zwischenglieds, des ersten Verbindungsbauteils und/oder des zweiten Verbindungsbauteils. Zusätzlich kann sich, je nach Ausführungsform, auch das zweite Zwischenglied verschieben. Alternativ oder zusätzlich bewirkt ein Einfahren und Ausfahren der zweiten Kolbenstange eine entsprechende Verschiebung des zweiten Zwischenglieds, des ersten Verbindungsbauteils und/oder des zweiten Verbindungsbauteils.

In einer Ausführungsform umgreifen das erste Zwischenglied, das erste Verbindungsbauteil und das zweite Zwischenglied vorzugsweise in dieser Reihenfolge den Lenkzylinder an den Enden der ersten Kolbenstange und der zweiten Kolbenstange U-förmig.

Insbesondere können die äußeren Schenkel der U-Form durch das erste und zweite Zwischenglied dargestellt werden. Vorzugsweise verlaufen die äußeren Schenkel der U-Form in einer Richtung entgegengesetzt zu dem jeweils anderen Schenkel. Mit anderen Worten gesagt, kann ein Innenwinkel der U-Form zwischen dem ersten Schenkel (dem ersten Zwischenglied) und dem Mittelschenkel (dem ersten Verbindungsbauteil) größer als 90° und ein Innenwinkel der U-Form zwischen den zweiten Schenkel (dem zweiten Zwischenglied) und dem Mittelschenkel (dem ersten Verbindungsbauteil) kann größer als 90° sein.

In einer weiteren Ausführungsform erstreckt sich das erste Zwischenglied ausgehend von dem Ende der ersten Kolbenstange in einer Richtung zu der zweiten Spurstange. Alternativ oder zusätzlich erstreckt sich das zweite Zwischenglied ausgehend von dem Ende der zweiten Kolbenstange in einer Richtung zu der ersten Spurstange.

In einem Ausführungsbeispiel weist die Lenkvorrichtung ferner eine Längsführung auf. Die Längsführung führt das erste Verbindungsbauteil in einer Richtung parallel zu einer Längsachse des Zylindergehäuses und/oder ist an dem Zylindergehäuse befestigt. Vorzugsweise weist die Längsführung ein Rohrelement auf, in dem das erste Verbindungsbauteil verschiebbar gelagert ist. Alternativ oder zusätzlich ist das erste Verbindungsbauteil als eine Führungsstange und/oder das zweite Verbindungsbauteil als eine Stange ausgebildet. Die Längsführung des ersten Verbindungsbauteils ermöglicht die Aufnahme von Querkräften und eine Verdrehsicherung für den Lenkzylinder.

In einer Weiterbildung ist das erste Verbindungsbauteil so geführt und mit dem ersten Zwischenglied und dem zweiten Zwischenglied verbunden, dass über die erste Spurstange und/oder die zweite Spurstange eingeleitete Kräfte, insbesondere Querkräfte, ohne Verdrehen der Lenkeinrichtung aufgenommen werden. Vorzugsweise können die Kräfte über das erste Zwischenglied und/oder das zweite Zwischenglied in den Lenkzylinder übertragen werden.

In einem weiteren Ausführungsbeispiel ist das erste Gelenk mittels einer Befestigungsverbindung, insbesondere einer Schraubverbindung, durch das erste Zwischenglied hindurch an dem ersten Verbindungsbauteil und/oder dem zweiten Verbindungsbauteil befestigt. Alternativ oder zusätzlich ist das zweite Gelenk mittels einer Befestigungsverbindung, insbesondere einer Schraubverbindung, durch das zweite Zwischenglied hindurch an dem ersten Verbindungsbauteil und/oder dem zweiten Verbindungsbauteil befestigt. Damit können Befestigungselemente eingespart und der vorhandene Bauraum optimal ausgenutzt werden. Insbesondere wird nur eine Schraubverbindung benötigt um das jeweilige Gelenk mit dem jeweiligen Zwischenglied und dem Verbindungsbauteil zu verbinden.

In einer Ausführungsvariante weist das erste Zwischenglied eine Ausnehmung auf, die an eine Außenform des Zylindergehäuses zum Aufnehmen des Zylindergehäuses beim vollständigen Einfahren der ersten Kolbenstange angepasst ist. Alternativ oder zusätzlich weist das zweite Zwischenglied eine Ausnehmung auf, die an eine Außenform des Zylindergehäuses zum Aufnehmen des Zylindergehäuses beim vollständigen Einfahren der zweiten Kolbenstange angepasst ist. Damit kann der Verfahrweg der Kolbenstangen gegenüber einer Konstruktion ohne Ausnehmungen deutlich vergrößert werden.

Insbesondere kann eine Ausnehmung des ersten Zwischenglieds und/oder eine Ausnehmung des zweiten Zwischenglieds dem Lenkzylinder zugewandt sein.

Die Erfindung betrifft auch ein Kraftfahrzeug, vorzugsweise eine mobile Landmaschine, beispielsweise eine Pflanzenschutzspritze, mit einer ersten Achse, einer zweiten Achse und mindestens einer Einzelradaufhängung wie hierin offenbart, die in die erste Achse und/oder die zweite Achse integriert ist.

In einer Ausführungsform ist die Vorrichtung zur Stoßdämpfung und/oder Höhenniveauanpassung gelenkig mit einer in einer Vorwärtsfahrtrichtung des Kraftfahrzeugs oder entgegen der Vorwärtsfahrtrichtung des Kraftfahrzeugs gewandten Seitenfläche des Stielbereichs verbunden.

In einer weiteren Ausführungsform ist das dritte Gelenk an einer in einer Vorwärtsfahrtrichtung des Kraftfahrzeugs oder entgegen der Vorwärtsfahrtrichtung des Kraftfahrzeugs gewandten Seitenfläche des Trägerkörpers angebracht.

Wie hierin verwendet, kann sich die Länge der Querlenker und/oder der Spurstangen vorzugsweise auf eine wirksame Länge zwischen den jeweiligen Gelenken der Komponente beziehen. Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht einer Pflanzenschutzspritze;
- Figur 2: eine perspektivische Vorderansicht einer lenkbaren Einzelradaufhängung ohne Lenkvorrichtung;
- Figur 3: eine perspektivische Rückansicht der lenkbaren Einzelradaufhängung ohne Lenkvorrichtung;
- Figur 4: eine Draufsicht auf die lenkbare Einzelradaufhängung ohne Lenkvorrichtung;
- Figur 5: eine perspektivische Vorderansicht der Einzelradaufhängung mit einer Lenkvorrichtung und ohne Darstellung einer Vorrichtung zur Stoßdämpfung und/oder Höhenniveauanpassung;
- Figur 6: eine perspektivische Rückansicht der Einzelradaufhängung mit der Lenkvorrichtung und ohne Darstellung der Vorrichtung zur Stoßdämpfung und/oder Höhenniveauanpassung; und

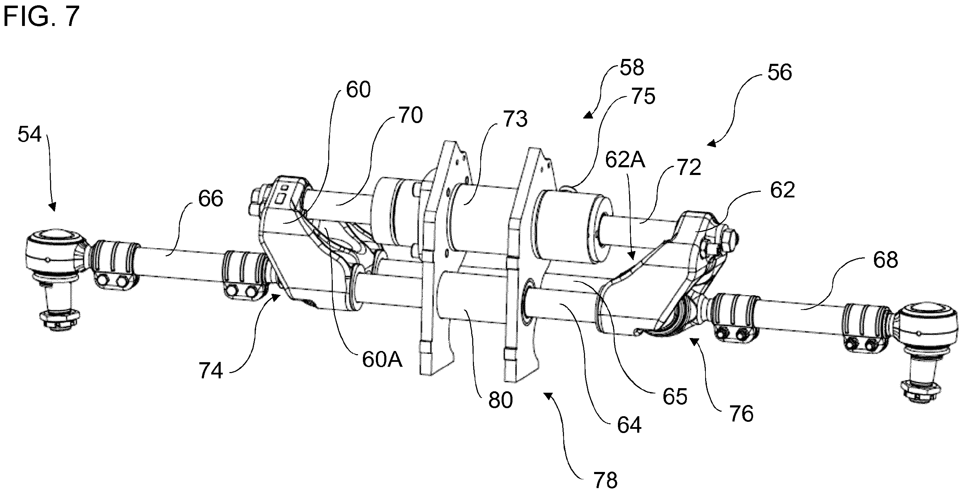

- Figur 7: eine perspektivische Rückansicht der Lenkvorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

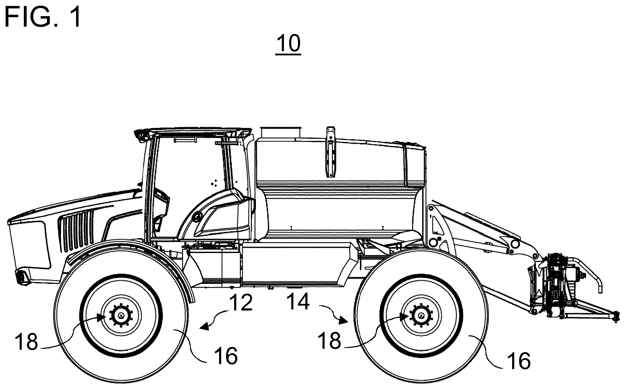

Die Figur 1 zeigt ein als mobile Landmaschine ausgebildetes Kraftfahrzeug 10, bei dem die erfindungsgemäße Vorrichtung verwendet werden kann. Im Einzelnen ist im dargestellten Beispiel das Kraftfahrzeug 10 als eine Pflanzenschutzspritze ausgebildet, bei der die erfindungsgemäße Vorrichtung besonders vorteilhaft verwendet werden kann. Fachleute werden indes erkennen, dass auch andere mobile Landmaschinen oder auch andere Kraftfahrzeuge die erfindungsgemäße Vorrichtung verwenden können.

Das Kraftfahrzeug 10 weist eine Vorderachse 12 und eine Hinterachse 14 auf. Die Vorderachse 12 trägt zwei Räder 16 und die Hinterachse 14 trägt zwei Räder 16, von denen in der Seitenansicht von Figur 1 jeweils nur eines sichtbar ist. Die Räder 16 sind jeweils auf eine Radnabe 18 montiert.

Die hierin offenbarte Einzelradaufhängung kann beispielsweise in der Vorderachse 12 und/oder der Hinterachse 14 des Kraftfahrzeugs 10 integriert sein.

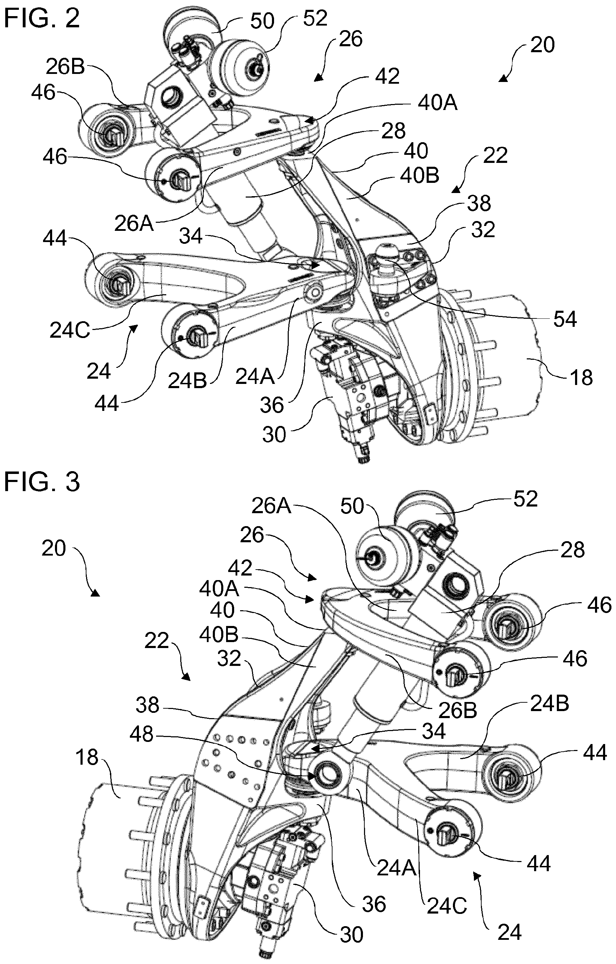

Unter Bezugnahme auf die Figuren 2 und 3 ist nachfolgend eine beispielhafte lenkbare Einzelradaufhängung 20 beschrieben.

Die Einzelradaufhängung 20 weist einen Radträger 22, einen ersten Querlenker 24 und einen zweiten Querlenker 26 auf. Zudem weist die Einzelradaufhängung 20 eine Vorrichtung 28 zur Stoßdämpfung- und Höhenniveauanpassung und einen Antriebsmotor 30 auf.

Der Radträger 22 weist einen Trägerkörper 32 und die Radnabe 18 auf.

Die Radnabe 18 ist drehbar am Trägerkörper 32 gelagert und von diesem getragen. Der Trägerkörper 32 trägt ferner den Antriebsmotor 30. Der Antriebsmotor 30 ist antreibend mit der Radnabe 18 verbunden. Vorzugsweise kann der Antriebsmotor 30 als ein Direktantrieb mit der Radnabe 18 verbunden sein. Zweckmäßig kann der Antriebsmotor 30 auf einer Rückseite der Radnabe 18 angeordnet sein. Es ist auch möglich, dass der Antriebsmotor 30 als Radnabenmotor in der Radnabe 18 integriert ist. Der Antriebsmotor 30 kann bspw. ein Hydraulikmotor oder ein Elektromotor sein. Der Radträger 22 bildet einen Achsschenkel einer Achsschenkellenkung der Einzelradaufhängung 20, die vorzugsweise die sogenannte Ackermanngeometrie nutzt.

Der Trägerkörper 32 ist dazu ausgebildet, eine Bodenfreiheit des Kraftfahrzeugs 10 zu vergrößern. Der Trägerkörper 32 erstreckt sich ausgehend von der Radnabe 18 in einer Vertikalrichtung nach oben. Der erste Querlenker 24 ist oberhalb des Antriebsmotors 30 und der Radnabe 18 mit dem Trägerkörper 32 verbunden. Der zweite Querlenker 26 ist oberhalb des ersten Querlenkers 24 mit dem Trägerkörper 32 verbunden. In anderen Worten, der Trägerkörper 32 ist wie ein Vertikalschenkel eines Portals so angeordnet, dass er die Radnabe 18 in einem unteren Bereich trägt und mit den Querlenkern 24, 26 in einem oberen Bereich verbunden ist. Zusammen mit einer entsprechenden Einzelradaufhängung 20 auf einer entgegengesetzten Längsseite des Kraftfahrzeugs 10 ergibt sich somit eine Radaufhängung in Portalstruktur, die eine relativ große Bodenfreiheit für das Kraftfahrzeug 10 ermöglicht.

Der erste Querlenker 24 ist über ein erstes Kugelgelenk 34 gelenkig mit dem Trägerkörper 32 verbunden. Beispielsweise weist der erste Querlenker 24 eine Gelenkpfanne des ersten Kugelgelenks 34 auf und ein Kugelkopf des ersten Kugelgelenks 34 ist an dem Trägerkörper 32 befestigt.

Das erste Kugelgelenk 34 ist an einem ersten Vorsprungbereich 36 des Trägerkörpers 32 montiert. Der erste Vorsprungbereich 36 erstreckt sich von einem Hauptkörperbereich 38 des Trägerkörpers 32 in Richtung zu dem ersten Querlenker 24. Der erste Vorsprungbereich 36 kann ungefähr mittig bezüglich einer Gesamthöhe des Trägerkörpers 32 angeordnet sein.

Der zweite Querlenker 26 ist über ein zweites Kugelgelenk 42 gelenkig mit dem Trägerkörper 32 verbunden. Beispielsweise weist der zweite Querlenker 26 eine Gelenkpfanne des zweiten Kugelgelenks 42 auf und ein Kugelkopf des zweiten Kugelgelenks 42 ist an dem Trägerkörper 32 befestigt.

Das zweite Kugelgelenk 42 ist an einem zweiten Vorsprungbereich 40 des Trägerkörpers 32 montiert. Der zweite Vorsprungbereich 40 bildet einen oberen Bereich des Trägerkörpers 32. Der zweite Vorsprungbereich 40 weist eine Stützfläche 40A auf, auf dem das zweite Kugelgelenk 42 montiert ist. Die Stützfläche 40A begrenzt den Trägerkörper 32 in einer Vertikalrichtung nach oben. Der zweite Vorsprungbereich 40 weist einen Halsbereich 40B auf, der die Stützfläche 40A mit dem Hauptkörperbereich 38 verbindet.

Die Kugelgelenke 34, 42 ermöglichen eine Schwenkbewegung zwischen dem jeweiligen Querlenker 24, 26 und dem Trägerkörper 32 zum Lenken des Rads 16. Insbesondere kann das Rad 16 um eine von den Kugelgelenken 34, 42 definierte Lenkachse einer Achsschenkellenkung der Einzelradaufhängung 20 gelenkt werden.

Zusätzlich ermöglichen die Kugelgelenke 34, 42 eine Kippbewegung zwischen dem jeweiligen Querlenker 24, 26 und dem Trägerkörper 32. Die Kippachse kann senkrecht zur Schwenkachse verlaufen. Somit werden von den Kugelgelenken 34, 42 auch Einfederbewegungen und Höhenniveauanpassungen, die bspw. durch die Vorrichtung 28 bewirkt werden, abgedeckt.

Der erste Querlenker 24 und der zweite Querlenker 26 sind zweckmäßig als Dreieckslenker ausgeführt und können somit gemeinsam einen Doppeldreieckslenker bilden. Allerdings sind prinzipiell auch andere Bauformen für die Querlenker denkbar.

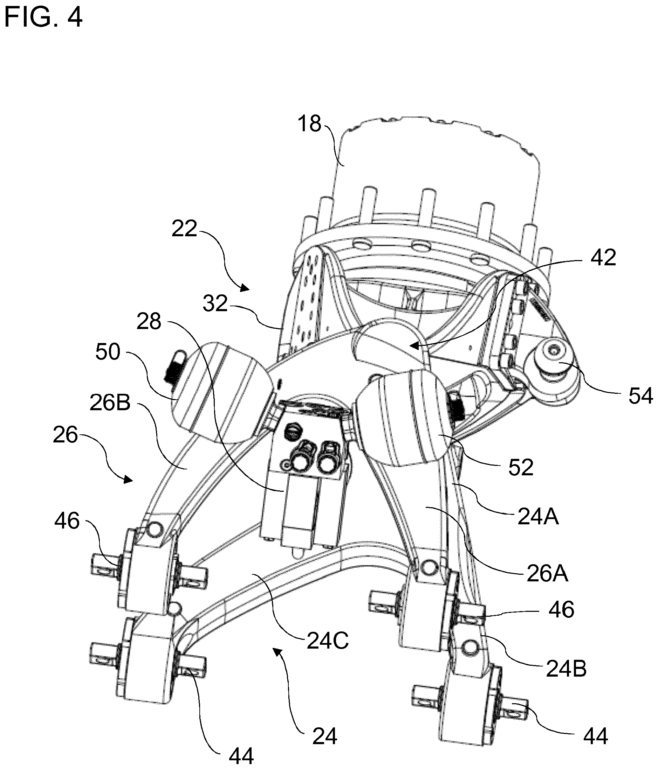

Der erste Querlenker 24 weist eine Gabelform oder Y-Form auf. Diese Form ergibt sich durch einen Stielbereich 24A und zwei Armbereiche 24B, 24C. Im Einzelnen ist ein freies Ende des Stielbereichs 24A mittels des ersten Kugelgelenks 34 mit dem Trägerkörper 32 verbunden. Der Stielbereich 24A gabelt sich an einem dem Trägerkörper 32 abgewandten Ende in zwei Armbereiche 24B, 24C. Vorzugsweise kann die Gabelform / Y-Form asymmetrisch sein. Zweckmäßig sind dazu die einander gegenüberliegenden Armbereiche 24B, 24C nicht spiegelsymmetrisch ausgebildet (siehe auch Figur 4). Der erste Armbereich 24B ist bspw. weniger stark gekrümmt bzw. weniger stark angewinkelt als der zweite Armbereich 24C.

Der zweite Querlenker 26 weist eine Bogenform auf. Ein Scheitel der Bogenform des zweiten Querlenkers 26 ist mittels des zweiten Kugelgelenks 42 mit dem Trägerkörper 32 verbunden. Ausgehend vom Scheitel erstrecken sich zwei gegenüberliegende Armbereiche 26A, 26B in einer Richtung weg von dem Trägerkörper 32. Vorzugsweise kann die Bogenform asymmetrisch sein. Zweckmäßig sind dazu die einander gegenüberliegenden Armbereiche 26A, 26B nicht spiegelsymmetrisch ausgebildet (siehe auch Figur 4). Der erste Armbereich 26A ist bspw. weniger stark gekrümmt bzw. weniger stark angewinkelt als der zweite Armbereich 26B.

Der erste Querlenker 24 und der zweite Querlenker 26 sind jeweils über zwei weitere Gelenke 44, 46 mit einem Rahmenbauteil (nicht dargestellt) verbunden. Die weiteren Gelenke 44, 46 können beispielsweise als Radialkugelgelenke ausgebildet sein, die über Durchgangsbohrungen in hervorstehenden Bolzen an dem Rahmenbauteil anbringbar sind. Die weiteren Gelenke 44, 46 sind an Enden der Querlenker 24, 26 angeordnet, die dem Trägerkörper 32 abgewandt sind. Im Einzelnen ist ein Gelenk 44, 46 jeweils an einem freien Ende jedes Armbereichs 24B, 24C, 26A, 26B angeordnet.

Die Vorrichtung 28 zur Stoßdämpfung und Höhenniveauanpasseinrichtung ist im dargestellten Ausführungsbeispiel als eine integrierte Einheit, z. B als ein hydropneumatischer Zylinder, ausgebildet, die sowohl eine Stoßdämpfung bewirkt als auch eine Höhenniveauanpassung der Einzelradaufhängung 20 ermöglicht. Es ist möglich, dass separate Vorrichtungen zur Stoßdämpfung und Höhenniveauanpassung vorgesehen sind. Es ist auch möglich, dass die Vorrichtung 28 nur zur Stoßdämpfung oder nur zur Höhenniveauanpassung ausgebildet ist.

Die Vorrichtung 28 ist über ein Gelenk 48 (siehe bspw. Figur 3) an dem ersten Querlenker 24 angebracht. Das Gelenk 48 kann bspw. ein Drehgelenk oder Schwenkgelenk sein. Das Gelenk 48 verbindet die Vorrichtung 28 drehbar bzw. schwenkbar mit dem ersten Querlenker 24.

Vorzugsweise die Vorrichtung 28 mittels des Gelenks 48 mit dem Stielbereich 24A des ersten Querlenkers 24 verbunden. Eine derartige Anordnung ermöglicht eine robuste Aufhängung des ersten Querlenkers 24 an der Vorrichtung 28. Diese Anordnung wird ermöglicht durch die Gabel- oder Y-Form des ersten Querlenkers 24. Bspw. ist das Gelenk 48 an einer in Vorwärtsfahrtrichtung oder entgegen der Vorwärtsfahrtrichtung des Kraftfahrzeugs 10 gewandten Seitenfläche des Stielbereichs 24A des ersten Querlenkers 24 angebracht. An einem dem Gelenk 48 entgegengesetzten Ende der Vorrichtung 28 kann die Vorrichtung 28 gelenkig, z. B. schwenkbeweglich, an einem Rahmenbauteil (nicht dargestellt) angebracht sein.

Die Vorrichtung 28 kann bspw. an einem oberen Ende davon einen oder mehrere Druckspeicher 50, 52 aufweisen. Die Druckspeicher 50, 52 können bspw. eine Federfunktion zur Stoßdämpfung bereitstellen, um die von den Rädern 16 übertragende Vibrationen zu dämpfen.

Die Vorrichtung 28 ist so angeordnet, dass sie sich bauraumgünstig zwischen dem ersten Armbereich 26A und dem zweiten Armbereich 26B des zweiten Querlenkers 26 erstreckt. Durch die Gabel- oder Y-Form des ersten Querlenkers 24 sowie die asymmetrische Form des ersten und zweiten Querlenkers 24, 26 kann die Vorrichtung dennoch - ebenfalls bauraumgünstig - an der Seitenfläche des Stielbereichs 24A gelenkig angebracht werden.

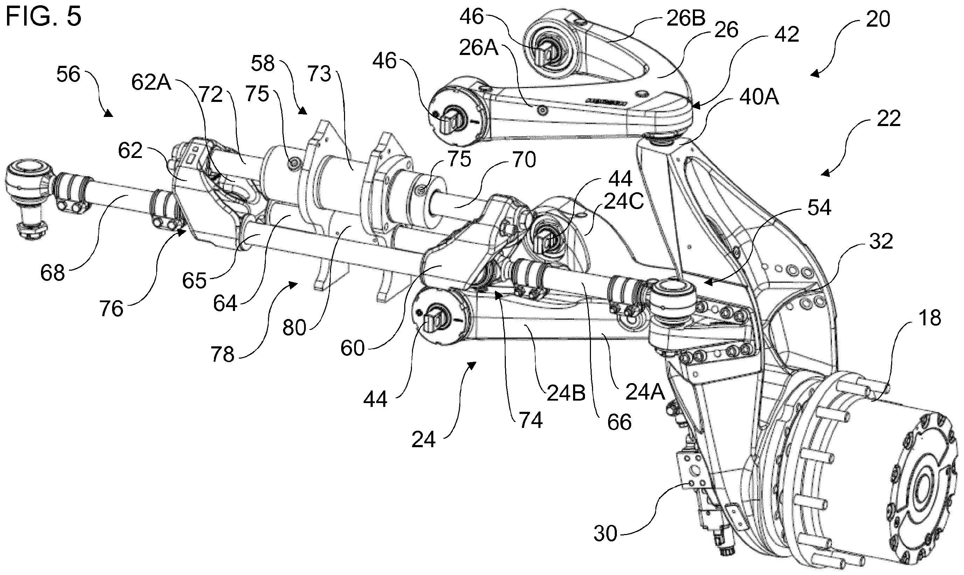

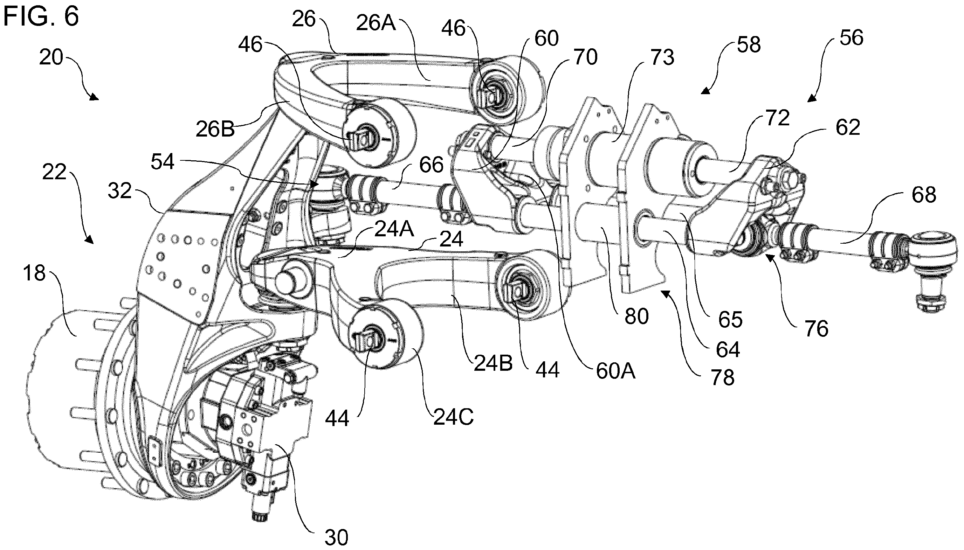

An einer in Vorwärtsfahrtrichtung oder entgegen der Vorwärtsfahrtrichtung gewandten Seite des Trägerkörpers 32 ist ein drittes Kugelgelenk 54 montiert. An dem dritten Kugelgelenk 54 kann eine erste Spurstange 66 (nicht dargestellt in den Figuren 2 bis4; siehe Figuren 4 bis 6) montiert werden. Die erste Spurstange 66 ermöglicht eine Achsschenkellenkung um die von den Kugelgelenken 34, 42 definierte Lenkachse. Das dritte Kugelgelenk 54 kann an einer in Fahrtrichtung oder entgegen der Fahrtrichtung gewandten Seitenfläche des Trägerkörpers 32 montiert sein.

Vorzugsweise kann das dritte Kugelgelenk 54 an einer Seitenfläche des Trägerkörpers 32 montiert sein, die entgegengesetzt zu einer Seitenfläche des Stielbereichs 24A, an dem das Gelenk 48 angebracht ist, angeordnet sein. In Kombination mit der asymmetrische Form der Querlenker 24, 26 wird so eine bauraumgünstige Anordnung der ersten Spurstange 66 ermöglicht.

Unter Bezugnahme auf die Figuren 4, 5 und 6 ist nachfolgend eine beispielhafte Lenkvorrichtung 56 der Einzelradaufhängung 20 beschrieben.

Die Lenkvorrichtung 56 weist einen Lenkzylinder 58, ein erstes Zwischenglied 60 und ein zweites Zwischenglied 62 auf. Die Lenkvorrichtung 56 weist zudem ein erstes Verbindungsbauteil 64, ein zweites Verbindungsbauteil 65, die erste Spurstange 66 und eine zweite Spurstange 68 auf.

Der Lenkzylinder 58 kann als ein Gleichlaufzylinder mit einer erster Kolbenstange 70 und einer zweiter Kolbenstange 72 ausgebildet sein. Der Lenkzylinder 58 weist ein Zylindergehäuse 73 auf. Die erste Kolbenstange 70 und die zweite Kolbenstange 72 sind ein- und ausfahrbar in dem Zylindergehäuse 73 gelagert. Im Einzelnen ist die erste Kolbenstange 70 entgegengesetzt zu der zweiten Kolbenstange 72 ein- und ausfahrbar. Insbesondere können sich die erste Kolbenstange 70 und die zweite Kolbenstange 72 von gegenüberliegenden Seiten einer Kolbenfläche im Zylindergehäuse 73 erstrecken. Die erste Kolbenstange 70 und die zweite Kolbenstange 72 sind miteinander über die Kolbenfläche verbunden und somit in ihren Bewegungen gekoppelt. Ein Einfahren der ersten Kolbenstange 70 führt zu einem Ausfahren der zweiten Kolbenstange 72 und umgekehrt. Die erste Kolbenstange 70 und die zweite Kolbenstange 72 können als voneinander separate Bauteile oder als integrale Einheit bspw. zusammen mit der Kolbenfläche ausgebildet sein. Der Lenkzylinder 58 kann als ein Hydraulikzylinder ausgebildet sein. Hydraulikfluid kann beispielsweise über Hydraulikanschlüsse 75 zu oder aus dem Zylindergehäuse 73 geleitet werden.

An gegenüberliegenden äußeren Enden der Kolbenstangen 70, 72 sind die Zwischenglieder 60, 62 befestigt. Damit bewegen sich die Zwischenglieder 60, 62 zusammen mit der Bewegung der Kolbenstangen 70, 72. Die Zwischenglieder 60, 62 sind über die Verbindungsbauteile 64, 65 miteinander verbunden. Das erste Zwischenglied 60, die Verbindungsbauteile 64, 65 und das zweite Zwischenglied 62 umgreifen die äußeren Enden der ersten und zweiten Kolbenstange 70, 72 U-förmig.

Die erste Spurstange 66 ist über das dritte Kugelgelenk 54 gelenkig mit dem Trägerkörper 32 verbunden. Die zweite Spurstange 68 ist entsprechend mit einem dem Trägerkörper eines Radträgers auf der anderen Längsseite des Kraftfahrzeugs verbunden (nicht dargestellt).

Die erste Spurstange 66 ist gelenkig an dem ersten Zwischenglied 60 über ein Gelenk 74, insbesondere ein Radialkugelgelenk, angebracht. Die zweite Spurstange 68 ist gelenkig an dem zweiten Zwischenglied 62 über ein Gelenk 76, insbesondere ein Radialkugelgelenk, angebracht. Im Einzelnen ist die erste Spurstange 66 an dem ersten Zwischenglied 60 an einer Position angebracht, die bezüglich des äußeren Endes der ersten Kolbenstange 70 versetzt ist. Ebenso ist die zweite Spurstange 68 an dem zweiten Zwischenglied 62 an einer Position angebracht, die bezüglich des Endes der zweiten Kolbenstange 72 versetzt ist.

Insbesondere sind die Zwischenglieder 60, 62 so ausgebildet, dass ein Abstand zwischen den gegenüberliegenden äußeren Enden der Kolbenstangen 70, 72 größer ist als ein Abstand zwischen den Gelenken 74, 76. Dazu sind die Gelenke 74, 76 in einer Radialrichtung bezüglich einer Längsachse der der Kolbenstangen 70, 72 versetzt zu den Kolbenstangen 70, 72. Zusätzlich sind die Gelenke 74, 76 in einer Richtung parallel zu der Längsachse der Kolbenstangen 70, 72 bezüglich der jeweiligen äußeren Enden der Kolbenstangen 70, 72 zueinander versetzt, nämlich zweckmäßig nach innen. In anderen Worten, die Gelenke 74, 76 sind bezüglich einer Vertikalachse unter den Kolbenstangen 70, 72 angeordnet und bezüglich einer Fahrzeugquerachse (Vorderachsenlängsrichtung) hin zu einer Fahrzeugmittelachse (Achsmitte) versetzt.

Zum Ermöglichen der versetzten Anordnung der Gelenke 74, 76 erstreckt sich das erste Zwischenglied 60 von dem Ende der ersten Kolbenstange 70 in einer Richtung zu der zweiten Spurstange 68. Gleichermaßen erstreckt sich das zweite Zwischenglied 62 von dem Ende der zweiten Kolbenstange 72 in einer Richtung zu der ersten Spurstange 66.

Die Anordnung der Gelenke 74, 76 ermöglicht in Verbindung mit den Querlenkern 24, 26 einen platzsparenden Aufbau einer Ackermanngeometrie (Achsschenkellenkung). Insbesondere ergeben die Anordnung und Dimensionierung der Querlenker 24, 26 und der ersten Spurstange 66 jeweils ein Parallelogramm, damit bei einer Federbewegung der Einzelradaufhängung 20 keine Lenkbewegung entsteht. Somit ergibt sich keine Spuränderung bei einer Federbewegung.

Fachleute werden indes erkennen, dass die versetzte Anordnung eines Gelenks einer Spurstange bezüglich eines Endes einer Kolbenstange eines Lenkzylinders auch bei als Differentialzylinder ausgebildeten Lenkzylindern mit nur einer Kolbenstange eingesetzt werden kann. Somit können beispielsweise vergleichbare Vorteile erzielt werden.

Die Gelenke 74, 76 sind an den Verbindungsbauteilen 64, 65 befestigt. Im Einzelnen können bspw. Schrauben (nicht dargestellt), die sich durch Durchgangslöcher in den Zwischengliedern 60, 62 erstrecken, in Gewinde der Verbindungsbauteile eingeschraubt sein. Zum Beispiel könnte eine Schraube (nicht dargestellt) durch ein Durchgangsloch eines Verbindungsendes des Gelenks 74 und ein Durchgangsloch des ersten Zwischenglieds 60 in ein Innengewinde des ersten Verbindungsbauteils 64 eingeschraubt sein. Damit sind die Spurstangen 66, 68 über die Gelenke 74, 76 an den Zwischengliedern 60, 62 angebracht.

Das erste Verbindungsbauteil 64 kann als eine Führungsstange ausgebildet sein. Das zweite Verbindungsbauteil kann als eine Stange ausgebildet sein. Eine Längsführung 78 führt das erste Verbindungsbauteil 64 während einer Bewegung, die durch ein Ausfahren der Kolbenstange 70 oder 72 bewirkt wird. Die Längsführung 78 weist dazu ein Hülsen- oder Rohrelement 80 auf, in dem das erste Verbindungsbauteil 64 verschiebbar gelagert ist. Die Längsführung 78 führt das erste Verbindungsbauteil 64 in einer Richtung parallel zu einer Längsachse des Lenkzylinders 58. Die Längsführung 78 ist an dem Zylindergehäuse 73 befestigt.

In anderen Ausführungsformen kann beispielsweise statt zweier Verbindungsbauteile nur ein längsgeführtes Verbindungsbauteil vorgesehen sein.

Um eine möglichst große Verfahrstrecke der Kolbenstangen 70, 72 zu ermöglichen, weisen die Zwischenglieder 60, 62 jeweils eine Ausnehmung 60A, 62A auf. Die Ausnehmungen 60A, 62A sind an eine Außenform des Zylindergehäuses 73 angepasst. Somit kann das Zylindergehäuse 73 beim vollständigen Einfahren der ersten Kolbenstange 70 teilweise in der Ausnehmung 60A des ersten Zwischenglieds 60 aufgenommen werden. Andererseits kann das Zylindergehäuse 73 beim vollständigen Einfahren der zweiten Kolbenstange 72 teilweise in der Ausnehmung 62A des zweiten Zwischenglieds 62 aufgenommen werden.

Der Lenkzylinder 58 bringt die benötigte Lenkkraft zum Lenken des Radträgers 22 auf. Zusätzlich stützt der Lenkzylinder 58 die ungleichmäßig über die Räder 16 eingebrachten Kräfte ab. Die Lenckräfte werden über die Spurstangen 66, 68 übertragen. Über die Räder 16 eingebrachte Kräfte werden über die Spurstangen 66, 68 in die Verbindungsbauteile 64, 65 eingeleitet. Durch die Längsführung (Linearführung) 78 können zusätzlich Querkräfte aufgenommen und eine Verdrehsicherung des Lenkzylinders 58 ermöglicht werden. Über die Zwischenglieder 60, 62 werden die Kräfte in den Lenkzylinder 58 übertragen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Kraftfahrzeug
- 12: Erste Achse (Vorderachse)
- 14: Zweite Achse (Hinterachse)
- 16: Rad
- 18: Radnabe
- 20: Einzelradaufhängung
- 22: Radträger
- 24: Erster Querlenker
- 24A: Stielbereich
- 24B: Erster Armbereich
- 24C: Zweiter Armbereich
- 26: Zweiter Querlenker
- 26A: Erster Armbereich
- 26B: Zweiter Armbereich
- 28: Vorrichtung zur Stoßdämpfung und Höhenniveauanpassung
- 30: Antriebsmotor
- 32: Trägerkörper
- 34: Erstes Kugelgelenk
- 36: Erster Vorsprungbereich
- 38: Hauptkörperbereich
- 40: Zweiter Vorsprungbereich
- 40A: Stützfläche
- 40B: Halsbereich
- 42: Zweites Kugelgelenk
- 44: Gelenk
- 46: Gelenk
- 48: Gelenk
- 50: Druckspeicher
- 52: Druckspeicher
- 54: Drittes Kugelgelenk
- 56: Lenkvorrichtung
- 58: Lenkzylinder
- 60: Erstes Zwischenglied
- 60A: Ausnehmung
- 62: Zweites Zwischenglied
- 62A: Ausnehmung
- 64: Erstes Verbindungsbauteil
- 65: Zweites Verbindungsbauteil
- 66: Erste Spurstange
- 68: Zweite Spurstange
- 70: Erste Kolbenstange
- 72: Zweite Kolbenstange
- 73: Zylindergehäuse
- 74: Gelenk
- 75: Hydraulikanschluss
- 76: Gelenk
- 78: Längsführung
- 80: Rohrelement

## Patentansprüche

1. Einzelradaufhängung (20) für ein lenkbares Rad (16) eines Kraftfahrzeugs (10), vorzugsweise einer mobile Landmaschine, beispielsweise einer Pflanzenschutzspritze, wobei die Einzelradaufhängung (20) aufweist:
einen Radträger (22), der einen Trägerkörper (32) und eine drehbar mit dem Trägerkörper (32) verbundene Radnabe (18) für das lenkbare Rad (16) aufweist;
einen Antriebsmotor (30), der von dem Trägerkörper (32) getragen und antreibend mit der Radnabe (18) verbunden ist;
**dadurch gekennzeichnet, dass** die Einzelradaufhängung (20) aufweist:
einen ersten Querlenker (24), der mittels eines ersten Kugelgelenks (34) mit dem Trägerkörper (32) oberhalb des Antriebsmotors (30) und/oder der Radnabe (18) verbunden ist; und
einen zweiten Querlenker (26), der mittels eines zweiten Kugelgelenks (42) mit dem Trägerkörper (32) oberhalb des ersten Querlenkers (24) verbunden ist.

2. Einzelradaufhängung (20) nach Anspruch 1, ferner aufweisend:
eine Vorrichtung (28) zur Stoßdämpfung und/oder Höhenniveauanpassung, die gelenkig mit dem ersten Querlenker (24) verbunden ist.

3. Einzelradaufhängung (20) nach Anspruch 1 oder Anspruch 2, wobei:
der erste Querlenker (24) gabelförmig oder Y-förmig mit einem Stielbereich (24A), der sich in zwei gegenüberliegende Armbereiche (24B, 24C) gabelt, ausgebildet ist, wobei vorzugsweise ein freies Ende des Stielbereichs (24A) mittels des ersten Kugelgelenks (34) mit dem Trägerkörper (32) verbunden ist.

4. Einzelradaufhängung (20) nach Anspruch 3, wobei:
die Vorrichtung (18) zur Stoßdämpfung und/oder Höhenniveauanpassung gelenkig, vorzugsweise schwenkbar, mit dem Stielbereich (24A) verbunden ist.

5. Einzelradaufhängung (20) nach einem der Ansprüche 2 bis 4, wobei:
der zweite Querlenker (26) zumindest teilweise bogenförmig mit zwei gegenüberliegenden Armbereichen (26A, 26B) ausgebildet ist; und
die Vorrichtung (18) zur Stoßdämpfung und/oder Höhenniveauanpassung zwischen den zwei gegenüberliegenden Armbereichen (26A, 26B) angeordnet ist.

6. Einzelradaufhängung (20) nach einem der Ansprüche 2 bis 5, wobei:
die Vorrichtung (18) zur Stoßdämpfung und/oder Höhenniveauanpassung als ein hydropneumatischer Zylinder ausgebildet ist.

7. Einzelradaufhängung (20) nach einem der vorherigen Ansprüche, ferner aufweisend:
eine Spurstange (66) zur Verbindung mit einem Lenkzylinder (58), wobei die Spurstange (66) über ein drittes Gelenk (54), vorzugsweise Kugelgelenk, mit dem Trägerkörper (32) verbunden ist.

8. Einzelradaufhängung (20) nach Anspruch 7, wobei:
die mit der Vorrichtung (18) zur Stoßdämpfung und/oder Höhenniveauanpassung gelenkig verbundene Seitenfläche des Stielbereichs (24A) des ersten Querlenkers (24) entgegengesetzt zu der Seitenfläche des Trägerkörpers (32), an der das dritte Gelenk (54) angebracht ist, gewandt ist.

9. Einzelradaufhängung (20) nach einem der vorherigen Ansprüche, wobei:
der erste Querlenker (24) und/oder der zweite Querlenker (26) asymmetrisch ausgebildet ist.

10. Einzelradaufhängung (20) nach einem der vorherigen Ansprüche, wobei:
der erste Querlenker (24) und/oder der zweite Querlenker (26) sich gegenüberliegende Armbereiche (24B, 24C, 26A, 26B) aufweist, die unterschiedlich stark gekrümmt oder unterschiedlich stark angewinkelt sind.

11. Einzelradaufhängung (20) nach Anspruch 10, wenn abhängig vom Anspruch 7, wobei:
der Armbereich (24B, 26A) des ersten Querlenkers (24) und/oder des zweiten Querlenkers (26), der dem dritten Gelenk (54) und/oder der Spurstange (66) zugewandt ist, weniger stark gekrümmt oder weniger stark angewinkelt ist als der jeweils gegenüberliegende Armbereich (24C, 26B) des ersten Querlenkers (24) und/oder des zweiten Querlenkers (26).

12. Einzelradaufhängung (20) nach einem der vorherigen Ansprüche, wobei:
der erste Querlenker (24) und/oder der zweite Querlenker (26) als Dreieckslenker ausgebildet ist; und/oder
der erste Querlenker (24) und der zweite Querlenker (26) gemeinsam einen Doppeldreieckslenker bilden; und/oder
der Trägerkörper (32) sich zur Erhöhung einer Bodenfreiheit ausgehend von der Radnabe (18) im Wesentlichen in einer Vertikalrichtung nach oben erstreckt und/oder der Trägerkörper (32) die Radnabe (18) und/oder den Antriebsmotor in einem unteren Bereich des Trägerkörpers (32) trägt und mit dem ersten und zweiten Querlenker (24, 26) in einem oberen Bereich des Trägerkörpers (32) verbunden ist.

13. Kraftfahrzeug (10), vorzugsweise mobile Landmaschine, beispielsweise Pflanzenschutzspritze, mit:
einer ersten Achse (12) und einer zweiten Achse (14); und
mindestens einer Einzelradaufhängung (20) nach einem der vorherigen Ansprüche, die in die erste Achse (12) und/oder die zweite Achse (14) integriert ist.

14. Kraftfahrzeug (20) nach Anspruch 13, wenn abhängig vom Anspruch 3, wobei:
die Vorrichtung (18) zur Stoßdämpfung und/oder Höhenniveauanpassung gelenkig mit einer in einer Vorwärtsfahrtrichtung des Kraftfahrzeugs (10) oder entgegen der Vorwärtsfahrtrichtung des Kraftfahrzeugs (10) gewandten Seitenfläche des Stielbereichs (24A) verbunden ist.

15. Kraftfahrzeug (20) nach einem von den Ansprüchen 13 und 14, wenn abhängig vom Anspruch 7, wobei:
das dritte Gelenk (54) an einer in einer Vorwärtsfahrtrichtung des Kraftfahrzeugs (10) oder entgegen der Vorwärtsfahrtrichtung des Kraftfahrzeugs (10) gewandten Seitenfläche des Trägerkörpers (32) angebracht ist.

## Claims

1. Independent wheel suspension (20) for a steerable wheel (16) of a motor vehicle (10), preferably of a mobile agricultural machine, for example a crop protection sprayer, wherein the independent suspension (20) has:
a wheel support (22) which has a support member (32) and a wheel hub (18) for the steerable wheel (16), said wheel hub (18) being rotatably connected to the support member (32);
a drive motor (30) which is supported by the support member (32) and for driving is operatively connected to the wheel hub (18);
**characterized in that** the independent wheel suspension (20) has:
a first transverse control arm (24) which by means of a first ball joint (34) above the drive motor (30) and/or the wheel hub (18) is connected to the support member (32); and
a second transverse control arm (26) which by means of a second ball joint (42) above the first transverse control arm (24) is connected to the support member (32).

2. Independent wheel suspension (20) according to Claim 1, furthermore having:
a device (28) which, for absorbing shocks and/or adapting the height level, is connected in an articulated manner to the first transverse control arm (24).

3. Independent wheel suspension (20) according to Claim 1 or Claim 2, wherein:
the first transverse control arm (24) is configured in the shape of a fork or a Y, having a stem region (24A) which bifurcates into two mutually opposite arm regions (24B, 24C), wherein a free end of the stem region (24A) by means of the first ball joint (34) is preferably connected to the support member (32) .

4. Independent wheel suspension (20) according to Claim 3, wherein:
the device (18) for absorbing shocks and/or adapting the height level is connected in an articulated, preferably pivotable, manner to the stem region (24A) .

5. Independent wheel suspension (20) according to one of Claims 2 to 4, wherein:
the second transverse control arm (26) is at least in part configured so as to be arcuate, having two mutually opposite arm regions (26A, 26B); and
the device (18) for absorbing shocks and/or adapting the height level is disposed between the two mutually opposite arm regions (26A, 26B).

6. Independent wheel suspension (20) according to one of Claims 2 to 5, wherein:
the device (18) for absorbing shocks and/or adapting the height level is configured as a hydro-pneumatic cylinder.

7. Independent wheel suspension (20) according to one of the preceding claims, furthermore having:
a tie rod (66) for connecting to a steering cylinder (58), wherein the tie rod (66) by way of a third joint (54), preferably a ball joint, is connected to the support member (32).

8. Independent wheel suspension (20) according to Claim 7, wherein:
the lateral face of the stem region (24A) of the first transverse control arm (24) that is connected to the device (18) for absorbing shocks and/or adapting the height level faces counter to the lateral face of the support member (32) to which the third joint (54) is attached.

9. Independent wheel suspension (20) according to one of the preceding claims, wherein:
the first transverse control arm (24) and/or the second transverse control arm (26) are/is configured so as to be asymmetrical.

10. Independent wheel suspension (20) according to one of the preceding claims, wherein:
the first transverse control arm (24) and/or the second transverse control arm (26) have/has mutually opposite arm regions (24B, 24C, 26A, 26B) which are curved to dissimilar degrees or angled to dissimilar degrees.

11. Independent wheel suspension (20) according to Claim 10, if dependent on Claim 7, wherein:
the arm region (24B, 26A) of the first transverse control arm (24) and/or of the second transverse control arm (26) that faces the third joint (54) and/or the tie rod (66) is curved to a lesser degree or angled to a lesser degree than the respective opposite arm region (24C, 26B) of the first transverse control arm (24) and/or of the second transverse control arm (26).

12. Independent wheel suspension (20) according to one of the preceding claims, wherein:
the first transverse control arm (24) and/or the second transverse control arm (26) are/is configured as a wishbone; and/or
the first transverse control arm (24) and the second transverse control arm (26) conjointly form a double wishbone; and/or
the support member (32), for increasing a ground clearance, proceeding from the wheel hub (18) extends upward in a substantially vertical direction, and/or the support member (32) supports the wheel hub (18) and/or the drive motor in a lower region of the support member (32) and in an upper region of the support member (32) is connected to the first and the second transverse control arm (24, 26) .

13. Motor vehicle (10), preferably a mobile agricultural machine, for example a crop protection sprayer, having:
a first axle (12) and a second axle (14); and
at least one independent wheel suspension (20) according to one of the preceding claims, which is integrated in the first axle (12) and/or the second axle (14).

14. Motor vehicle (20) according to Claim 13, if dependent on Claim 3, wherein:
the device (18) for absorbing shocks and/or adapting the height level is connected in an articulated manner to a lateral face of the stem region (24A) that faces in a direction of forward travel of the motor vehicle (10) or counter to the direction of forward travel of the motor vehicle (10).

15. Motor vehicle (20) according to one of Claims 13 and 14, if dependent on Claim 7, wherein:
the third joint (54) is attached to a lateral face of the support member (32) that faces in a direction of forward travel of the motor vehicle (10) or counter to the direction of forward travel of the motor vehicle (10).

## Revendications

1. Suspension indépendante (20) pour une roue directrice (16) d'un véhicule automobile (10), de préférence d'une machine agricole mobile, par exemple d'un pulvérisateur de produits phytosanitaires, la suspension indépendante (20) présentant :
un support de roue (22), qui présente un corps de support (32) et un moyeu de roue (18) pour la roue directrice (16), relié de manière rotative au corps de support (32) ;
un moteur d'entraînement (30), qui est porté par le corps de support (32) et relié en entraînement au moyeu de roue (18) ;
**caractérisé en ce que** la suspension indépendante (20) présente :
un premier bras transversal (24), qui est relié au moyen d'une première articulation à rotule (34) au corps de support (32) au-dessus du moteur d'entraînement (30) et/ou du moyeu de roue (18) ; et
un deuxième bras transversal (26), qui est relié au moyen d'une deuxième articulation à rotule (42) au corps de support (32) au-dessus du premier bras transversal (24) .

2. Suspension indépendante (20) selon la revendication 1, présentant en outre :
un dispositif (28) pour l'amortissement des chocs et/ou l'ajustement du niveau de hauteur, qui est relié de manière articulée au premier bras transversal (24).

3. Suspension indépendante (20) selon la revendication 1 ou la revendication 2, dans laquelle :
le premier bras transversal (24) est réalisé sous forme de fourche ou sous forme de Y avec une zone de manche (24A) qui se divise en deux zones de bras opposées (24B, 24C), une extrémité libre de la zone de manche (24A) étant de préférence reliée au corps de support (32) au moyen de la première articulation à rotule (34).

4. Suspension indépendante (20) selon la revendication 3, dans laquelle :
le dispositif (18) pour l'amortissement des chocs et/ou l'ajustement du niveau de hauteur est relié de manière articulée, de préférence de manière pivotante, à la zone de manche (24A).

5. Suspension indépendante (20) selon l'une quelconque des revendications 2 à 4, dans laquelle :
le deuxième bras transversal (26) est réalisé au moins partiellement en forme d'arc avec deux zones de bras opposées (26A, 26B) ; et
le dispositif (18) pour l'amortissement des chocs et/ou l'ajustement du niveau de hauteur est agencé entre les deux zones de bras opposées (26A, 26B).

6. Suspension indépendante (20) selon l'une quelconque des revendications 2 à 5, dans laquelle :
le dispositif (18) pour l'amortissement des chocs et/ou l'ajustement du niveau de hauteur est réalisé sous la forme d'un vérin hydropneumatique.

7. Suspension indépendante (20) selon l'une quelconque des revendications précédentes, présentant en outre :
une barre d'accouplement (66) destinée à être reliée à un vérin de direction (58), la barre d'accouplement (66) étant reliée au corps de support (32) par l'intermédiaire d'une troisième articulation (54), de préférence une articulation à rotule.

8. Suspension indépendante (20) selon la revendication 7, dans laquelle :
la surface latérale de la zone de manche (24A) du premier bras transversal (24), reliée de manière articulée au dispositif (18) pour l'amortissement des chocs et/ou l'ajustement du niveau de hauteur, est orientée à l'opposé de la surface latérale du corps de support (32) sur laquelle est disposée la troisième articulation (54).

9. Suspension indépendante (20) selon l'une quelconque des revendications précédentes, dans laquelle :
le premier bras transversal (24) et/ou le deuxième bras transversal (26) sont réalisés sous forme asymétrique.

10. Suspension indépendante (20) selon l'une quelconque des revendications précédentes, dans laquelle :
le premier bras transversal (24) et/ou le deuxième bras transversal (26) présentent des zones de bras (24B, 24C, 26A, 26B) opposées qui sont courbées à différents degrés ou coudées à différents degrés.

11. Suspension indépendante (20) selon la revendication 10, lorsqu'elle dépend de la revendication 7, dans laquelle :
la zone de bras (24B, 26A) du premier bras transversal (24) et/ou du deuxième bras transversal (26) qui fait face à la troisième articulation (54) et/ou à la barre d'accouplement (66) est moins courbée ou moins coudée que la zone de bras (24C, 26B) respectivement opposée du premier bras transversal (24) et/ou du deuxième bras transversal (26).

12. Suspension indépendante (20) selon l'une quelconque des revendications précédentes, dans laquelle :
le premier bras transversal (24) et/ou le deuxième bras transversal (26) sont réalisés sous la forme d'un bras triangulaire ; et/ou
le premier bras transversal (24) et le deuxième bras transversal (26) forment ensemble un double bras triangulaire ; et/ou
le corps de support (32) s'étend vers le haut à partir du moyeu de roue (18) essentiellement dans une direction verticale pour augmenter la garde au sol et/ou le corps de support (32) porte le moyeu de roue (18) et/ou le moteur d'entraînement dans une zone inférieure du corps de support (32) et est relié au premier et au deuxième bras transversal (24, 26) dans une zone supérieure du corps de support (32).

13. Véhicule automobile (10), de préférence machine agricole mobile, par exemple pulvérisateur de produits phytosanitaires, comprenant :
un premier essieu (12) et un deuxième essieu (14) ; et
au moins une suspension indépendante (20) selon l'une quelconque des revendications précédentes, qui est intégrée dans le premier essieu (12) et/ou le deuxième essieu (14).

14. Véhicule automobile (20) selon la revendication 13, lorsqu'elle dépend de la revendication 3, dans lequel :
le dispositif (18) pour l'amortissement des chocs et/ou l'ajustement du niveau de hauteur est relié de manière articulée avec une surface latérale de la zone de manche (24A) orientée dans une direction de marche avant du véhicule automobile (10) ou à l'encontre de la direction de marche avant du véhicule automobile (10).

15. Véhicule automobile (20) selon l'une quelconque des revendications 13 et 14, lorsqu'elles dépendent de la revendication 7, dans lequel :
la troisième articulation (54) est disposée sur une surface latérale du corps de support (32) orientée dans une direction de marche avant du véhicule automobile (10) ou à l'encontre de la direction de marche avant du véhicule automobile (10).
